# EUROPEAN PATENT SPECIFICATION

(11) **EP 2 481 561 B1**
(45) Date of publication and mention of the grant of the patent: **16.04.2014**
(21) Application number: 12152315.3
(22) Date of filing: 24.01.2012
(51) Int. Cl.: B29D 30/54, G06Q 50/04

(54) **System and method for tracking a tire trough a retread process**
System und Verfahren zur Verfolgung eines Reifens während einer Runderneuerung
Système et procédé de poursuite d'un pneu pendant le rechapage

(30) Priority: 26.01.2011 US 201161436419 P
(43) Date of publication of application: 01.08.2012
(73) Proprietor: The Goodyear Tire & Rubber Company, Akron, OH 44316-0001 (US)
(72) Inventor: McIntosh, Johnny Lee, Lavaca, AR Arkansas 72941 (US); Curtis, Tony Lee, Greenwood, AR Arkansas 72936 (US); Potts, Anthony Neil, Van Buren, AR Arkansas 72956 (US); Stewart, Brandon Curtis, Van Buren, AR Arkansas 72956 (US); Holmes, Bradley Dean, Van Buren, AR Arkansas 72956 (US); McWater, Harold Shane, Alma, AR Arkansas 72921 (US)
(74) Representative: Kutsch, Bernd

(56) References cited:
- WO-A1-2010/115711
- BR-A- PI0 504 657
- US-A- 4 773 011
- US-A- 5 060 173
- US-A- 5 313 827

## Description

### Field of the Invention

The invention is generally related to productivity equipment software, and more specifically to equipment and software for tracking the tire retread process.

### Background of the Invention

In commercial trucking, the treads of truck tires often get worn down on tire casings that are otherwise still usable. The tires can often be retread at substantial cost and materials savings relative to new tires. At a tire retread plant, each casing is inspected to determine whether it meets the qualifications to be retread, which may include the condition of the tire as well as its age and how many previous retreads it has had. Tires that "pass" are patched and repaired where necessary, then receive new treads and are returned to the customer. Tires that "fail" may be returned to the customer without alteration or repair, or may be scrapped.

Conventionally, each of these steps is performed by a retread technician based on general plant policy regarding suitability of tires for retread. It is also known for customers to give custom specifications which are read by the technician and then used as the basis for approving the tires for retread for that customer. This system, which relies on the consistent treatment of specifications by retread technicians, has a limit to its flexibility because customer specifications of above a certain level of detail or complexity may be unreasonable to expect technicians to follow, and a limit to its reliability because even the best technicians may not be able to accurately select and execute the proper specification.

Therefore, a method of automating the evaluation process for inspection, repair, and retread at a tire retread facility is needed.

Various processes for retreading tires and systems for retreading tires are described in BR PI 0504657-2 A, US-A- 5,060,173, US-A- 4,773,011, WO-A-2010/115711 and US-A- 5,313,827.

### Summary of the Invention

The invention relates to a system in accordance with claim 1 and to a method in accordance with claim 3.

Dependent claims refer to preferred embodiments of the invention.

A system and method for tracking a tire through a retread process preferably includes various checkpoints with networked touch screen computers at each checkpoint. At certain inspection and repair checkpoints the touch screen computers display tire cross section images with multiple different regions. Selecting a region allows a technician to change injury or repair data associated with that region of the tire. The computer automatically checks entered information against customer retread specifications and alerts the technician if the tire does not fit the customer's requirements for repairing or retreading the tire.

In one embodiment, a system for tracking a tire through a retread process includes a plurality of checkpoint stations representing sequential steps in the tire retread process. A first and a second touch screen display are each associated with one of the checkpoint stations. The first touch screen display is configured to show a tire cross section image with a plurality of regions and to respond to touching one of the regions by providing an interface that allows a user to enter tire injury information associated with that region of the selected tire. The second touch screen display is configured to show a tire cross section image with a plurality of regions and to respond to touching one of the regions by providing an interface that allows a user to enter tire repair information associated with that region of the selected tire. The first touch screen display may be associated with an initial inspection checkpoint and the second touch screen display with a repair checkpoint.

In another embodiment, a method for tracking a tire through a retread process includes receiving a tire at a checkpoint station having a technician and a touch screen display; displaying to the technician a tire cross section image with a plurality of regions on the touch screen display; in response to the technician selecting one of the plurality of regions, displaying an interface on the touch screen display; and modifying data associated with the selected region of the tire based on the technician's interaction with the interface. The technician may be modifying data representing injuries or repairs to the selected region of the tire.

In another embodiment, a method for tracking a tire through a retread process includes accessing data associated with a tire, accessing data associated with a specification, automatically evaluating if the tire data falls within parameters based on the specification data, and alerting a user based on the automatic evaluation.

In another embodiment, a method for tracking a tire through a retread process includes accessing data associated with a tire; sequentially accessing a plurality of specifications until one is found with parameters that the tire passes; and failing the tire only if none of the specifications can pass the tire. The specifications may be automatically evaluated in a set order based on a priority value associated with each specification.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

### Brief Description of the Drawings

FIGURE 1 is a block diagram illustrating the checkpoints of an exemplary retread process in accordance with the present invention.
FIGURE 2 is a block diagram showing a networked computer in accordance with the present invention.
FIGURE 3 is a flowchart illustrating a checkpoint evaluation process in accordance with the present invention.
FIGURES 4A through 4B show initial inspection checkpoint displays in accordance with the present invention.
FIGURES 5A through 5B show repair checkpoint displays in accordance with the present invention.

### Detailed Description

Embodiments consistent with the invention are directed to a tire retread tracking system wherein each station includes a computer with touch screen display customized to the needs of that station's technician. Each computer is networked with the rest of the system to allow consistent tracking of the tires throughout the retread process.

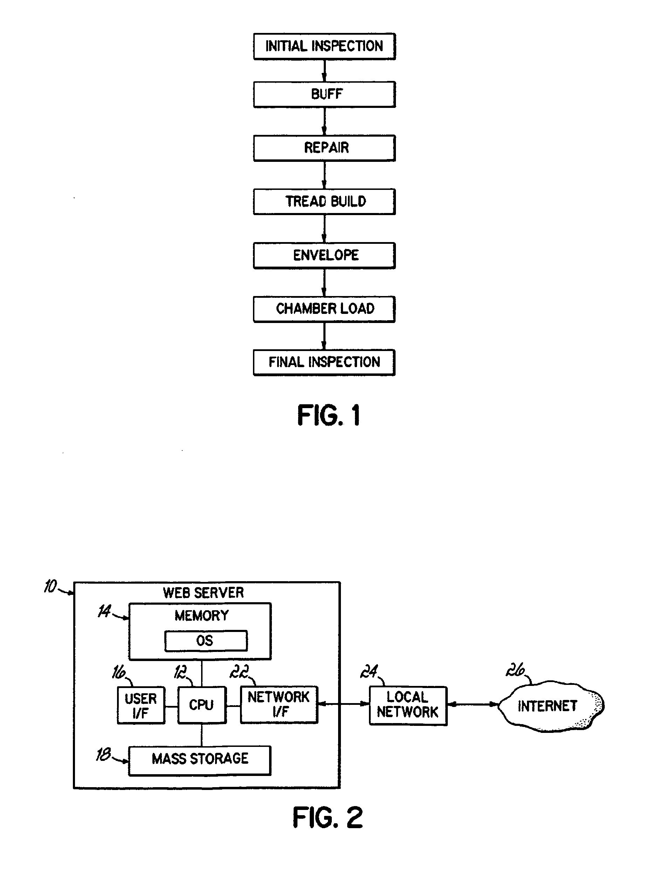

Turning now to the figures, FIG. 1 illustrates the stations of an exemplary tire retread process in accordance with the present invention. At each station, a checkpoint station computer 10 may used as shown in FIG. 2.

For the purposes of the invention, computer 10 may represent practically any type of computer, computer system, or other suitable programmable electronic device consistent with the invention. Moreover, computer 10 may be implemented using one or more networked computers, e.g., in a cluster or other distributed computing system.

Computer 10 typically includes a central processing unit 12 including at least one microprocessor coupled to memory 14, which may represent the random access memory (RAM) devices comprising the main storage of computer 10, as well as any supplemental levels of memory, e.g., cache memories, non-volatile or backup memories (e.g., programmable or flash memories), read-only memories, etc. In addition, memory 14 may be considered to include memory storage physically located elsewhere in computer 10, e.g., any cache memory in a processor in CPU 12, as well as any storage capacity used as a virtual memory, e.g., as stored on a mass storage device 18 or on another computer coupled to computer 10.

Computer 10 also typically receives a number of inputs and outputs for communicating information externally. For interface with a user or operator, computer 10 typically includes a user interface 16 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

With respect to the station terminals, the user interface 16 may include a touch screen monitor which displays data to the user and receives inputs from the user via the same screen interface, as further described below with respect to each retread station.

For additional storage, computer 10 may also include one or more mass storage devices 18, e.g., a floppy or other removable disk drive, a hard disk drive, a direct access storage device (DASD), an optical drive (e.g., a CD drive, a DVD drive, etc.), and/or a tape drive, among others. Furthermore, computer 10 includes an interface 22 with one or more networks (e.g., a LAN, a WAN, a wireless network, and/or the Internet, among others) to permit the communication of information with other computers and electronic devices. It should be appreciated that computer 10 typically includes suitable analog and/or digital interfaces between CPU 12 and each of components 14, 16, 18, 22 as is well known in the art.

Each retread checkpoint station may have a terminal in accordance with computer 10, which may be connected to a local network 24 which maintains the retread tracking system. In one embodiment, an additional computer 10 maintains and serves centralized data reflecting tire records, retread specifications, and customer account records. In another embodiment, the local network 24 is connected to the internet 26, and at least some of the data is available on a computer 10 not available on the local network 24 but available over the internet. For example, in one embodiment, some customers use multiple retread plants at different physical locations and have centralized customer specifications that are maintained on a central database. These centralized customer specifications may be accessed by each retread plant over the internet but may not be changed at any particular local retread plant.

In some embodiments, the system may also include small handheld units in communication with the local network 24 and the rest of the retread tracking system. These units, which may have some or all of the components shown for computer 10, can allow technicians to track shipments of incoming and outgoing casings more easily and communicate new work orders more rapidly, making it easier to track workflow and plan plant production in accordance with the available work.

Where the local network 24 maintaining the retread tracking system is connected to the internet 26, it may be possible to securely access tire records, retread specifications, and account records from any internet-enabled device using proper authorization as known in the art. In some embodiments, alerts associated with any part of the retread system can also be conveyed to other devices connected to the system through the internet, thus allowing off-site management to receive and send messages and alerts to on-site technicians and other users.

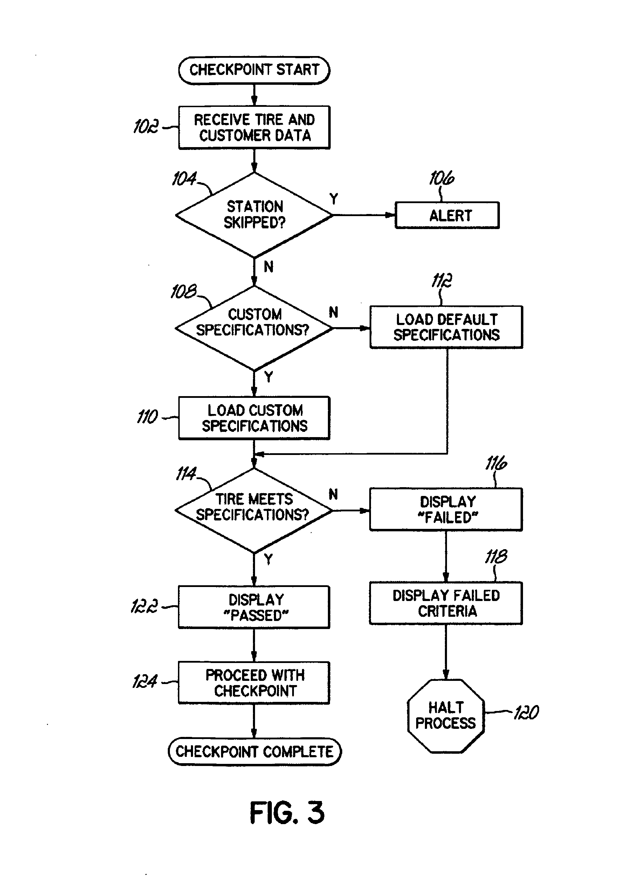

Each retread checkpoint computer may include a set of checks to assure that the retread process is being generally complied with, such as the process outlined in the flowchart of FIG. 3. The checkpoint process starts when a tire is entered at the checkpoint. In one embodiment, a tire is entered by scanning or entering a barcode or other number associated with the tire. This allows the checkpoint computer to access tire information, which may include information entered at earlier checkpoints (block 102). If the checkpoint that the tire has been entered at is not the next checkpoint that the tire is assigned (block 104), then the system may alert the technician that a necessary checkpoint has been skipped (block 106). This may occur, for instance, where the tire has been passed to a repair station before undergoing initial inspection or passed to a retread station without receiving an identified casing repair.

If the tire is determined to be at the right checkpoint, the checkpoint computer loads the specifications associated with the tire. Custom specifications may be loaded if the customer has any; otherwise, the defaults are used (blocks 108, 110, and 112).

Following the loading of the specification (and at any later point as illustrated by the arrow from block 124 to block 114), the tire data is compared to the loaded specifications to determine whether the tire is within all specified parameters (block 114). As long as the tire meets the specifications, a "passed" message is displayed and the checkpoint proceeds (blocks 122 and 124). When the tire fails to meets the specifications, a "failed" message displays and the process halts (block 116 and 120). Touching the "failed" message may convey the specification criteria that the tire failed to the technician (block 118).

Custom retread specifications include the capacity to treat tires differently on the basis of any relevant criteria. For example, different retread specifications may be entered based on a tire's casing manufacturer, tire size, tread design, wheel position, or retread/repair status. Each customer may include any number of hierarchical specifications to accommodate specific requirements. Each of these parameters can be evaluated automatically by the tracking system to assure compliance with the customer's retread requirements, automatically "failing" a casing that fails any criteria. When a system automatically determines that a casing is outside specification requirements, the checkpoint display indicates failure and provides the failed criteria to the retread technician (block 116), halting any further progress in the retread process (block 120).

In one embodiment, a custom retread specification may contain the following fields.

Casing Group. This is a list of allowed casing manufacturers. If a retread specification has a casing group listed, then only tire casings manufactured by one of the members of the group can be passed under the specification. If the specification does not have a casing group, then a tire by any manufacturer is allowed.

Tread Group. This is a list of allowed treads. If a retread specification has a tread group listed, then only tires with treads within the tread group can be passed under this specification. If the specification does not have a tread group, then a candidate tire is checked against the Position field instead.

Size Group. This is a list of allowed tire sizes. If a retread specification has a size group listed, then only tires of sizes in the size group can be passed under this specification. If the specification does not have a size group, then any size of tire is allowed.

Cap Type. This field takes two values, "Retread" or "Repair only". If "Repair only" is selected for a specification, then tires that are identified as requiring a new tread cannot be passed under this specification. If "Retread" is selected, this field does not cause tires to fail the specification.

Position. This field takes two values, "Drive" and "Trailer". The system identifies each tread as suitable under at least one of these two categories. If a specification does not list a Tread Group, then a candidate tire is instead checked to see whether its tread is suitable for the listed position.

Minimum and Maximum Age. If a tire's age in years is less than the value in the Minimum Age field or greater than the value in the Maximum Age field, the tire will fail the specification.

Minimum and Maximum Times Retread. Each time the tire is retread, this value for that tire increases by 1. If the tire's current value is less than the value of the Minimum Times Retread field or greater than the value in the Maximum Times Retread field, the tire will fail the specification.

Maximum Tread Depth. A tire's tread depth is measured in 32nds of an inch. If a tire's current tread depth value is greater than the Maximum Tread Depth, the tire will fail the specification.

Maximum Ozone Rating. This value is a number from 1 to 5 representing how weathered the casing appears, with a higher value representing a more weathered casing. If a tire's ozone rating value is greater than the Maximum Ozone Rating, the tire will fail the specification.

Maximum Current Repairs - Sections, Nails, Spots, Beads. These fields represent the limit to the number of the four different types of repairs that can be performed during the current retread process. If at any point the number of repairs entered to be performed in any one of the four categories (section repairs, nail hole repairs, spot repairs, bead repairs) exceeds the value in the associated Maximum Current Repairs field, the tire will fail the specification.

Maximum Total Repairs - Sections, Nails. These fields represent the limit to the total number of section repairs and nail hole repairs that can be performed over the lifetime of the casing. If the total of current and prior repairs in either of these categories exceeds the value in the associated Maximum Total Repairs field, the tire will fail the specification.

Sequence. This numerical value indicates the priority of the specification relative to other specifications with the same Group field values. Within a set of specifications where any of the Casing Group, Tread Group, and Size Group fields that have a listed group are listed as the same groups, specifications are evaluated from the smallest to the largest Sequence value. Once it is determined that a tire has failed one specification, the next specification is evaluated. Only when a tire has failed all available specifications does the tire "fail out".

Name. This text field gives a name to the specification, which in some retread processes may translate to a label affixed to the tire that is successfully retread under the specification. The name field may allow multiple specifications for different purposes to have similar criteria. For example, where newer tires may be needed for one set of vehicles and older but otherwise similar tires may be appropriate for a second set of vehicles, two specifications with different Maximum Age and Minimum Age fields may have different Name fields to reflect this.

The checking of retread specifications may occur at any time that new relevant information is entered during any stage of the checkpoint process.

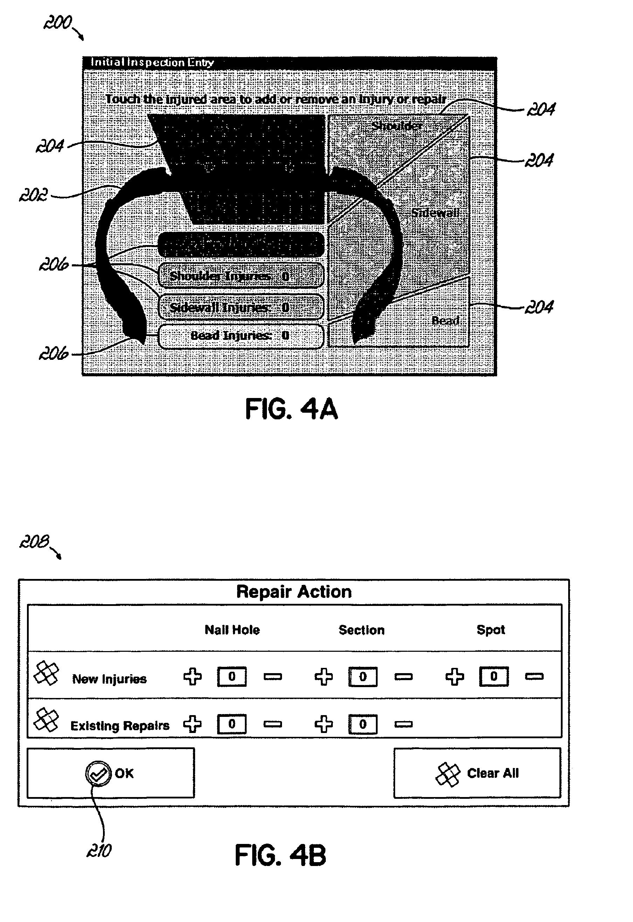

FIG. 4A shows a touch screen display 200 in accordance with one step of the initial inspection checkpoint. The display 200 may be part of a larger touch screen interface associated with the initial inspection checkpoint. Here, the display 200 shows a cross section of a tire 202, which includes regions 204 representing different sections of the tire which are treated differently in the repair process. In one embodiment, the crown, shoulder, sidewall, and bead may be identified by the different regions 204. Each region 204 has a matching injury count display 206 that shows the total number of injuries, both new and previously repaired, which has been recorded for that tire. The injury count display 206 may include only injuries recorded during initial inspection, or may also include known injuries from the tire's previous records if any exist. Touching on a given region 204 of the tire causes a repair action display 208, as shown in FIG. 4B, to appear that provides additional information about the new and existing injuries associated with the selected region 204. The number of existing nail hole and section patches identified by the technician is entered here along with the number of new nail hole, section, and spot injuries identified by the technician. Upon clicking the confirmation button 210, screen 200 reappears displaying a new number on the appropriate injury count display 206 if appropriate.

Once the initial inspection checkpoint is completed, assuming that the tire passes, it will go onto the Buff checkpoint. The purpose of this checkpoint is to determine what width of the desired tread the casing will accommodate, to perform the buffing procedure, and to record all of the measurements the buffer sends to the system when the buffing procedure is completed. If the tire continues to successfully check against the appropriate custom specifications throughout the Buff checkpoint, it will then move to the Repair checkpoint.

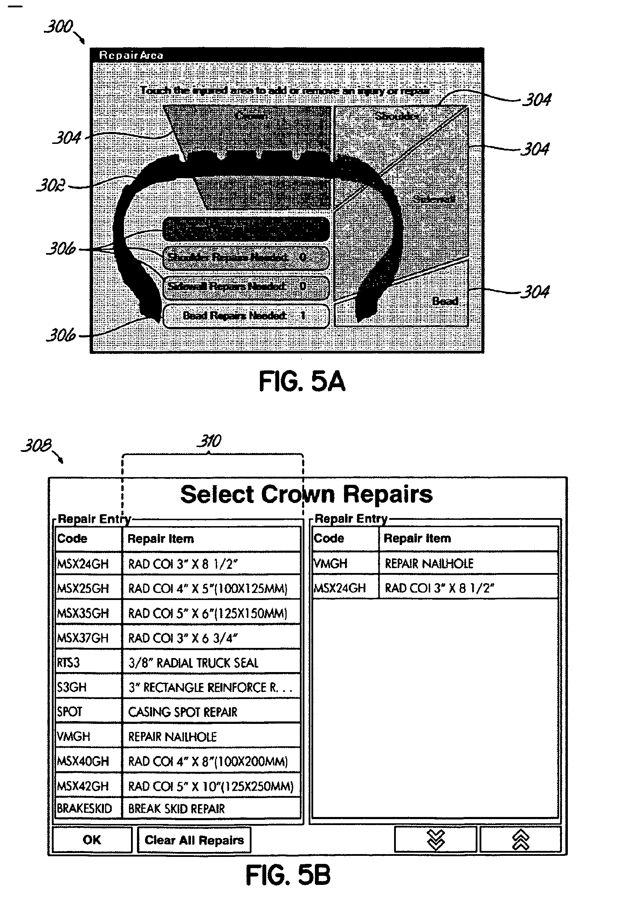

FIG. 5A shows a touch screen display 300 in accordance with one component of the Repair checkpoint. Here, the display 300 shows a cross section of a tire 302, which includes regions 304 representing different sections of the tire which are treated differently in the repair process. In one embodiment, the crown, shoulder, sidewall, and bead may be identified by the different regions 304. Each region 304 has a matching repair count display 306 that shows the total number of repairs which need to be performed. When the Repair checkpoint is first initiated, the number of repairs listed on the repair count 306 for each region 304 may be equal to the number of new injuries identified during the Initial Inspection checkpoint. The technician at the Repair checkpoint may also have the opportunity to identify, carry out, and report additional repairs. Throughout the Repair checkpoint, the system may check against the appropriate customer specification and alert the technician if new information causes the tire to fail out.

When the technician selects a region 304 on the touch screen display 300, a repair entry display 308 is shown as in FIG. 5B. Repair options are different for different regions of the tire cross section, and so different repair options as shown in window 310 are available depending on the cross section selected. The technician performs all selected repairs before the tire moves to the next checkpoint.

Once the casing has been inspected, buffed, and any needed repairs are made, it arrives at the Build checkpoint. This is where the builder notes what actual raw materials are used to create the retread and the point in the process in which the raw material inventory is relieved.

The next step after the casing has been through the build process is the Envelope checkpoint. All of the envelopes in the plant should have a barcode affixed to the valve stem which is used to match the casing barcode to the specific envelope that was used during the curing process. Each barcode should be unique to its envelope for the life of the envelope. Once the casing has been through the Envelope checkpoint, it must go through the Curing checkpoint. This checkpoint allows the technician to record the time it takes to cure the tire, as well as recording in what position in the chamber a particular tire was cured. The Final Inspection checkpoint is the last stop for a retread as it finishes the retread process. The purpose of this checkpoint is to look over the finished retread, ensure that it passes quality checks, and verify that all recorded information is correct.

Once a tire has passed or bypassed each identified checkpoint as appropriate, it is ready to be returned to the customer. Each tire that fails at any step in the retread process may be returned to the customer or scrapped as appropriate. In one embodiment, each tire that is ultimately rejected or finishes the retread process successfully is affixed with a label. Each label may include retread information associated with that tire. For example, some labels may include any of the following: a unique barcode for the tire, a work order and line number, a customer name and address, the size and tread of the tire, the tire manufacturer, a new tire DOT date, a salesman associated with servicing the customer, the list of repairs performed on the tire, the date the tire was finished, a Name associated with the retread specification that the tire passed, or a reason the tire failed out of the retread process. The label may facilitate the organizing of shipments from the retread plant to return tires to customers.

Other modifications will be apparent to one of ordinary skill in the art, as will other potential applications of the techniques described herein.

## Claims

1. A system for tracking a tire through a retread process, the system comprising:
a plurality of checkpoint stations, each checkpoint station representing a different sequential step in the tire retread process;
a first and a second touch screen display (200, 300) each associated with one of the plurality of checkpoint stations;
wherein the first touch screen display (200) is configured to show a tire cross section image with a plurality of regions (204), and further configured to respond to touching one of the plurality of regions by providing an interface that allows a user to enter tire injury information associated with that region (204) of the selected tire (10);
and wherein the second touch screen display (300) is configured to show a tire cross section image with a plurality of regions (304), and further configured to respond to touching one of the plurality of regions by providing an interface that allows a user to enter tire repair information associated with that region (304) of the selected tire (10).

2. The system of claim 1, wherein the first touch screen display (200) is associated with an initial inspection checkpoint and the second touch screen display (300) is associated with a repair checkpoint.

3. A method for tracking a tire through a retread process, the method comprising:
receiving a tire (202) at a checkpoint station having a touch screen display (200);
displaying to a technician a tire cross section image with a plurality of regions (204) on the touch screen display (200);
in response to the technician selecting one of the plurality of regions (204), displaying an interface on the touch screen display (200); and
modifying data associated with the selected region (204) of the tire (202) based on the technician's interaction with the interface.

4. The method of claim 3, wherein the interface comprises a list of injuries, and wherein the modified data represents injuries to the selected region (204) of the tire (202).

5. The method of claim 3 or 4, wherein the interface comprises a list of repairs, and wherein the modified data represents repairs to the selected region (204) of the tire (202).

## Patentansprüche

1. System zur Verfolgung eines Reifens während einer Runderneuerung, wobei das System umfasst:
eine Vielzahl von Kontrollpunktstationen, wobei jede Kontrollpunktstation einen unterschiedlichen Abfolgeschritt in der Reifenrunderneuerung darstellt;
einen ersten und einen zweiten Touchscreen-Bildschirm (200, 300), die jeder einer aus der Vielzahl von Kontrollpunktstationen zugeordnet sind;
wobei der erste Touchscreen-Bildschirm (200) dazu gestaltet ist, eine Reifenquerschnittsabbildung mit einer Vielzahl von Gebieten (204) zu zeigen, und weiterhin dazu gestaltet ist, auf das Berühren eines der Vielzahl von Gebieten durch Bereitstellen einer Schnittstelle zu reagieren, die es einem Benutzer gestattet, mit diesem Gebiet (204) des ausgewählten Reifens (10) zusammenhängende Reifenbeschädigungsinformation einzugeben;
und wobei der zweite Touchscreen-Bildschirm (300) dazu gestaltet ist, eine Reifenquerschnittsabbildung mit einer Vielzahl von Gebieten (304) zu zeigen und weiterhin dazu gestaltet ist, auf das Berühren eines der Vielzahl von Gebieten durch Bereitstellen einer Schnittstelle zu reagieren, die es einem Benutzer gestattet, mit diesem Gebiet (304) des ausgewählten Reifens (10) zusammenhängende Reifenreparaturinformation einzugeben.

2. System nach Anspruch 1, wobei der erste Touchscreen-Bildschirm (200) einem anfänglichen Inspektions-Kontrollpunkt zugeordnet ist und der zweite Touchscreen-Bildschirm (300) einem Reparatur-Kontrollpunkt zugeordnet ist.

3. Verfahren zur Verfolgung eines Reifens während einer Runderneuerung, wobei das Verfahren umfasst:
Aufnehmen eines Reifens (202) an einer Kontrollpunktstation, die einen Touchscreen-Bildschirm (200) aufweist;
einem Techniker auf dem Touchscreen-Bildschirm (200) Anzeigen einer Reifenquerschnittsabbildung mit einer Vielzahl von Gebieten (204);
in Reaktion auf den Techniker, der eines aus der Vielzahl von Gebieten (204) auswählt, Anzeigen einer Schnittstelle auf dem Touchscreen-Bildschirm (200); und
Modifizieren von mit dem ausgewählten Bereich (204) des Reifens (202) zusammenhängenden Daten auf Basis der Interaktion des Technikers mit der Schnittstelle.

4. Verfahren nach Anspruch 3, wobei die Schnittstelle eine Liste von Beschädigungen umfasst und wobei die modifizierten Daten Beschädigungen an dem ausgewählten Gebiet (204) des Reifens (202) darstellen.

5. Verfahren nach Anspruch 3 oder 4, wobei die Schnittstelle eine Liste von Reparaturen umfasst und wobei die modifizierten Daten Reparaturen an dem ausgewählten Gebiet (204) des Reifens (202) darstellen.

## Revendications

1. Système pour le repérage d'un bandage pneumatique à travers un processus de rechapage, le système comprenant :
plusieurs postes de contrôle, chaque poste de contrôle représentant une étape séquentielle différente dans le processus de rechapage du bandage pneumatique ;
un premier et un deuxième écran tactile (200, 300) chacun associé à un desdits plusieurs postes de contrôle ;
le premier écran tactile (200) étant configuré pour représenter une image d'un bandage pneumatique en coupe transversale, comprenant plusieurs zones (204) et étant configuré en outre pour répondre au fait de toucher une desdites plusieurs zones en procurant une interface qui permet à un utilisateur d'entrer des informations de lésion du bandage pneumatique associées à cette zone (204) du bandage pneumatique sélectionné (10) ;
et dans lequel le deuxième écran tactile (300) est configuré pour représenter une image d'un bandage pneumatique en coupe transversale, comprenant plusieurs zones (304) et étant configuré en outre pour répondre au fait de toucher une desdites plusieurs zones en procurant une interface qui permet à un utilisateur d'entrer des informations de lésion du bandage pneumatique associées à cette zone (304) du bandage pneumatique sélectionné (10).

2. Système selon la revendication 1, dans lequel le premier écran tactile (200) est associé à un poste de contrôle d'inspection initiale et le deuxième écran tactile (300) est associé à un poste de contrôle de réparation.

3. Procédé pour le repérage d'un bandage pneumatique à travers un processus de rechapage, le procédé comprenant le fait de:
réceptionner un bandage pneumatique (202) à un poste de contrôle possédant un écran tactile (200) ;
afficher à un technicien une image d'un bandage pneumatique en coupe transversale possédant plusieurs zones (204) sur un écran tactile (200) ;
en réponse à la sélection par le technicien d'une desdites plusieurs zones (204), afficher une interface sur un écran tactile (200) ; et
modifier des données associées à la zone sélectionnée (204) du bandage pneumatique (202) en se basant sur l'interaction du technicien avec l'interface.

4. Procédé selon la revendication 3, dans lequel l'interface comprend une liste de lésions, et dans lequel les données modifiées représentent des lésions dans la zone sélectionnée (204) du bandage pneumatique (202).

5. Procédé selon la revendication 3, dans lequel l'interface comprend une liste de réparations, et dans lequel les données modifiées représentent des réparations dans la zone sélectionnée (204) du bandage pneumatique (202).
